(19) Europäisches Patentamt
European Patent Office
Office européen des brevets

(11) **EP 2 779 745 A1**

(12) **EUROPEAN PATENT APPLICATION**

(43) Date of publication:
**17.09.2014 Bulletin 2014/38**

(51) Int Cl.:
*H04W 36/00* (2009.01)  *H04W 48/20* (2009.01)

(21) Application number: **13305277.9**

(22) Date of filing: **12.03.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Koziol, Dawid**<br>  **67-200 Glogow (PL)**<br>• **Panecki, Szymon**<br>  **05-825 Kateczyn (PL)** |
| (71) Applicant: **Orange**<br>**75015 Paris (FR)** | (74) Representative: **Milon, Marie-Anne**<br>**Cabinet Vidon**<br>**Technopole Atalante**<br>**16B rue de Jouanet**<br>**35703 Rennes Cedex 7 (FR)** |

(54) **Method for measuring the cellular mobility of at least one user equipment in a cellular network, corresponding user equipment, cell mobility measurement module and program.**

(57)    The invention pertains to a method for performing cell measurements for at least one user equipment in a cellular network.

According to the invention said method comprises the following steps of:
- detecting (21) an absence of cell reselection or handover after expiration of a first predetermined timer,
- setting (22) the user equipment to a Low-mobility state wherein a frequency for cell measurements, called a Low-mobility frequency for cell measurements, is reduced in comparison with a frequency for cell measurements of a default state of said user equipment, called a Normal-mobility state.

Fig. 2

**Description**

**1. Field of the invention**

The field of the invention is that of radio communications in cellular networks. More specifically, the invention relates to improving the mobility measurements of a user equipment from a current cell to a neighbouring cell, when a user equipment moves within the network or remains at the same place in the network.

The invention can be applied for example in the field of Long Term Evolution system according to minimum performance requirements in performance requirement specification of the radio resource management of 3$^{rd}$ Generation Partnership Project (3GPP).

**2. Prior art**

As the demand for mobile broadband access continues to increase, research and development continue to advance the UMTS technologies. In this context, 3GPP began a project to define the Long Term Evolution of UMTS cellular technology.

The specifications related to this effort are formally known as Evolved UMTS Terrestrial Radio Access (E-UTRA) and Evolved UMTS Terrestrial Radio Access Network (E-UTRAN), but are commonly referred by the project name Long Term Evolution, or LTE for short.

Specifically, in the downlink LTE, E-UTRA uses orthogonal frequency-division multiple access (OFDMA) and in the uplink a pre-coded version of OFDM called Single Carrier Frequency Division Multiple Access (SC-OFDMA), which provides higher data rates and lower latency and is optimized for packet data.

In E-UTRAN, the protocol stack consists of the Media access Control (MAC), Radio Link Control (RLC), Packet Data Convergence Protocol (PDCP) and Radio Resource Control (RRC) layers.

3GPP based cellular systems are designed for allowing a User Equipment (UE) to change its geographical location and still being able to establish connections to and from the network without any additional action required from user. This is achieved thanks to a set of procedures and processes called Mobility Management.

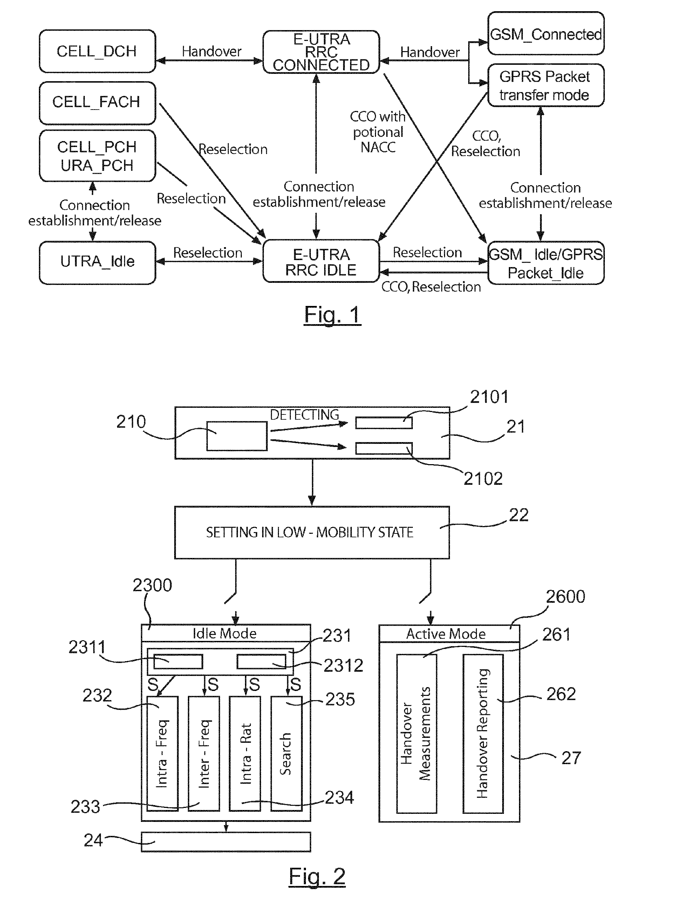

In such a system, a considered User Equipment (UE) being in an idle mode performs cell measurements, which allow it to determine whether the serving cell is the cell providing a potentially best transmission quality. This is done by comparing measured signal level and quality of the serving cell with the one measured for available neighbouring cells. Afterwards, a User Equipment (UE) in idle mode can perform cell reselection (change serving cell) in the case where proper criteria are met. In particular, rules and criteria for cell reselection for 3GPP User Equipment (UE) are described in the Technical Specification TS 36.304. These criteria are based on cell measurements, which are performed using the way described in the other Technical Specification TS 36.133. A representation of E-UTRA states and Inter Radio Access Technology (RAT) mobility procedures defined in the Technical Specification TS 36.331 is illustrated by figure 1 in particular.

All the additional information required by a User Equipment (UE) to perform required measurements and evaluate cell reselection criteria including additional parameters, neighbour list, carrier frequency information etc. needs to be delivered to a User Equipment (UE), which is usually implemented by the means of broadcasted system information or dedicated signalling sent by the base station.

In addition, LTE is optimized with a user equipment velocity of up to 15 km/h, but it happens usually that users are moving much faster while using a phone on a train or a car for example. This is the reason why increasing the speed of cell reselection decision depending on the user's velocity is required for such users.

Concerning the connected mode or in other words the active mode (synonymous to RRC-connected for LTE systems), a considered User Equipment (UE) performs a handover procedure. The term "handover" refers to a series of procedures in which if a cell (serving cell) where a User Equipment is currently located is changed due to mobility of the User Equipment, the User Equipment can continuously receive the current dedicated data/control channels even in the new cell (target cell).

To achieve a handover, a specific handover procedure is performed. The handover procedure comprises two groups of steps: the steps performed before the handover, and the ones performed after.

More precisely, steps performed before the handover implement a plurality of measurement reporting events for measurement report. Such a measurement procedure causes increase in complexity of the User Equipment, and an increase in transmission of measurement reports.

In particular, rules and criteria for handover procedure for 3GPP User Equipment (UE) are described in the Technical Specification TS 36.300, and also in the technical specifications listed above regarding the idle mode: TS 36.133 and TS 36.331.

Various approaches, either in connected mode or in idle mode have been proposed to reduce power consumption for a User Equipment, more generally called an apparatus, which can be for example a mobile terminal.

For example, a technique is presented in US 2012 207070 and is based on using a discontinuous reception (DRX) mode for enhancing mobility signalling by transitioning from a connected mode (in other words an active state) to an idle mode when a triggering event is detected.

Another technique is also presented in WO 2011/12278 and is based on avoiding measuring the different-frequency carriers one by one by implementing a joint mobility measurement of the adjacent cell, which permits to increase the speed of the mobility measurements, and thus to reduce the power consumption of the user equipment. However, such a technique involves some modifications of the system and thus increases its complexity, which can be especially dramatic for low-capacity or "light" terminals.

However, even though reduced, such reductions of power consumption do not benefit from the mobility situation, where a user equipment is quasi-static and therefore requires a cell reselection or handover to be performed very rarely and usually only during some unusual situations like base station failure, network reconfiguration etc.

### 3. Goals of the Invention

The invention is aimed especially at overcoming these problems of the prior art.

More specifically, it is a goal of the invention to provide a technique for reducing the power consumption of a User Equipment even when said user equipment is quasi-static. More precisely, reducing the power consumption of a User Equipment consists in reducing the power consumption related to cell measurements for cell reselection operations when the User Equipment is in idle mode, and/or the power consumption related to handover measurements and reporting when the User Equipment is in active mode, said "active mode" corresponding to a connected state of the User Equipment.

In particular, it is a goal of the invention to provide a technique of this kind that simplifies the processing of cell measurement and/or handover operations performed in the user equipment, for example a mobile terminal.

In addition, it is a goal of the invention to provide a technique of this kind that is easy to implement without leading to important structural changes of the user equipment whatever the considered mode (the term "mode" meaning idle mode and/or active mode).

Another goal of the proposed invention is to provide a technique of this kind that is easy to implement regardless of the type of Radio Access technology (RAT).

### 4. Summary of the Invention

These goals as well as others that shall appear more clearly here below are achieved by means of a method for performing measurements for at least one user equipment in a cellular network.

According to the invention, this method comprises the following steps of:

- detecting an absence of cell reselection or handover after expiration of a first predetermined timer,
- setting the user equipment to a Low-mobility state wherein a frequency for cell measurements, called a Low-mobility frequency for cell measurements, is reduced in comparison with a frequency for cell measurements of a default state of said user equipment, called a Normal-mobility state.

Thus, the invention permits to reduce the amount of measurements for at least one user equipment in a cellular network when said user equipment remains inside a current cell.

It must be noted that, in the prior art techniques, introducing such a "Low-mobility" state is not obvious. In fact, introducing "Medium-mobility" and "High-mobility" states in the prior art aims to enhance the network performance for user equipment moving faster than in the state of "Normal-mobility".

Indeed, according to these "Medium-mobility" and "High-mobility" states the cell reselection mechanism is improved by influencing the speed of the user equipment's decision to change the serving cell depending on the mobility speed. In other terms, the faster is the user equipment, the faster will be the reselection.

As a consequence, applying the same logic to a "Low-mobility" state would lead to a very slow user equipment's decision, and as a consequence would not help neither in terms of enhancing network performance nor power consumption reduction.

Thus, the invention goes beyond the prejudices of the one skilled in the art by defining a "Low-mobility" state thanks to the detection that no reselection or handover happens after a predetermined duration.

Such a detection step permits indeed to ensure that a check is made in order to avoid the switch in a "Low-mobility" state whereas a cell reselection or a handover had no time to be implemented, or whereas a User Equipment (UE) stays in the current cell only for a short period of time.

For example, said first predetermined timer can have duration $T_{LM}$ equal to 10 minutes. Such a first predetermined timer can be advantageously configurable and can have any value depending on the implementation.

Then, the "Low-mobility" state according to the invention is also defined by the implementation of a second step, which modifies the frequency of cell measurements by lowering it. In other terms the period between each cell measurements, when the user equipment is set in such a "Low-mobility" state is increased so that less cell measurements are implemented during this "Low-mobility" state in comparison with the "Normal-mobility" state.

Lowering the frequency of cell measurements means reducing the frequency but not stopping the cell measurements, in other words Lowering the frequency of cell measurements does not mean setting the frequency to zero.

Advantageously, when switching from an idle mode to an active mode or when switching from an active mode to an idle mode, said method maintains the user equipment in said Low-mobility state.

Indeed, the invention ensures, in the active mode, the continuity of a Low-mobility state set in the idle mode and in the idle mode the continuity of a Low-mobility state set in active mode.

According to a first embodiment of the invention, when said at least one user equipment is in an idle mode:

- said cell measurements correspond to cell reselection measurements and comprise at least serving cell measurements, and
- said method further comprises, the following steps of:

    o launching said cell reselection measurements at said Low-mobility frequency for cell measurements, said serving cell measurements being performed at a Low-mobility frequency for serving cell measurements, equal to a default frequency for serving cell measurements for said Normal-mobility state in idle mode, divided by a predetermined factor sf-Low$_{serving}$>1,
    o evaluating cell reselection criteria at said Low-mobility frequency for cell measurements.

Thus, by defining an idle mode "Low-mobility" state in a different way than the one that can be deduced from the prior art, a substantial power consumption reduction of a user equipment is achieved and thus battery lifetime is extended.

Advantageously, said cell measurements comprise at least serving cell measurements performed at said Low-mobility frequency for cell measurements, which is equal to a default frequency for serving cell measurements for said Normal-mobility state in idle mode divided by a first predetermined factor sf-Low$_{serving}$>1.

Thus, it can be noted that in this variant, lowering the frequency of the cell measurements is really easy to implement, since a simple multiplication is implemented. Such a factor can be for example implemented by default in a user equipment, and/or entered by the user and/or an operator, or according to another example sent through a broadcast message or user dedicated signalling (Radio Resource Control (RRC) messages).

In particular, said serving cell measurements comprise Reference Signal Received Power (RSRP) and Reference Signal Received Quality (RSRQ) parameters measurements. It can be noted that such serving cell measurements implemented during the "Low-mobility" state in ide mode of the invention, correspond to the classical ones of other mobility states, which does not involve a supplemental complexity.

According to an embodiment, depending on the value of measured Reference Signal Received Power (RSRP) and Reference Signal Received Quality (RSRQ) parameters of the serving cell obtained during said serving cell measurements, said cell measurements comprise also another type of cell measurements belonging to the group comprising at least:

- intra-frequency cell measurements,
- inter-frequency cell measurements,
- inter-RAT cell measurements, where "inter-RAT" means inter-Radio-Access-Technologies,

said intra-frequency cell measurements or said inter-frequency cell measurements or said inter-RAT cell measurements being performed with a low-mobility frequency for respectively intra-frequency cell measurements or for inter-frequency cell measurements or for inter-RAT cell measurements, which is equal to a default frequency for respectively intra-frequency cell measurements or inter-frequency cell measurements or inter-RAT cell measurements for said Normal-mobility state, divided by a predetermined factor sf-Low$_T$ >1.

In LTE, after measurement of RSRP and RSRQ, these measured values are used to calculate Srxlev and Squal parameters, which are defined in TS 36.304 in the following way:

| Srxlev | Cell selection RX level value (dB), $Srxlev = Q_{rxlevmeas} - (Q_{rxlevmin} + Q_{rxlevminoffset}) - Pcompensation,$ |
|---|---|
| Squal | Cell selection quality value (dB), $Squal = Q_{qualmeas} - (Q_{qualmin} + Q_{qualminoffset})$ |
| Q$_{rxlevmeas}$ | Measured cell RX level value (RSRP) |
| Q$_{qualmeas}$ | Measured cell quality value (RSRQ) |

(continued)

| $Q_{rxlevmin}$ | Minimum required RX level in the cell (dBm) |
|---|---|
| $Q_{qualmin}$ | Minimum required quality level in the cell (dB) |
| $Q_{rxlevminoffset}$ | Offset to the signalled $Q_{rxlevmin}$ taken into account in the Srxlev evaluation as a result of a periodic search for a higher priority Public Land Mobile Mobile Network (PLMN) while camped normally in a Visited Public Land Mobile Mobile Network (VPLMN) |
| $Q_{qualminoffset}$ | Offset to the signalled $Q_{qualmin}$ taken into account in the Squal evaluation as a result of a periodic search for a higher priority Public Land Mobile Mobile Network (PLMN) while camped normally in a Visited Public Land Mobile Mobile Network (VPLMN) |
| Pcomp | Pcompensation=max($P_{EMAX}$-$P_{PowerClass}$, 0) (dB) |
| $P_{EMAX}$ | Maximum TX power level a user equipment may use when transmitting on the uplink in the cell (dBm) defined as $P_{EMAX}$ in the Technical Specification TS 36.101 which is an integral part of the present invention. |
| $P_{PowerClass}$ | Maximum RF output power of the UE (dBm) according to the user equipment power class as defined in the Technical specification TS 36.101. |

Depending on the Reference Signal Received Power (RSRP) and Reference Signal Received Quality (RSRQ) measured parameters of the serving cell a User Equipment (UE) may be obliged to perform also intra-frequency cell measurements, and/or inter-frequency cell measurements, and/or inter-RAT cell measurements, which are then performed during the Low-mobility state with a low-mobility frequency corresponding to the Normal-mobility frequency divided by a second predetermined factor $sf\text{-}Low_T > 1$.

According to another embodiment, depending on the value of measured Reference Signal Received Power (RSRP) and Reference Signal Received Quality (RSRQ) parameters of the serving cell, said method comprises also a step of searching for higher, equal or lower priority inter-frequency layers and/or higher or lower inter-RAT layers performed with a low-mobility frequency, which is equal to a default frequency for searching for higher, equal or lower priority inter-frequency layers and/or higher or lower inter-RAT layers for said Normal-mobility state divided by a predetermined factor $sf\text{-}Low_{search} > 1$.

In a preferred embodiment, said user equipment is able to support different types of Radio Access Technologies (RAT) belonging to the group comprising at least:

- Evolved Universal Terrestrial Radio Access (E-UTRA FDD) with one carrier frequency,
- Evolved Universal Terrestrial Radio Access (E-UTRA FDD) with at least two carrier frequencies,
- Evolved Universal Terrestrial Radio Access (E-UTRA TDD) with one carrier frequency,
- Evolved Universal Terrestrial Radio Access (E-UTRA TDD) with at least two carrier frequencies,
- UMTS Terrestrial Radio Access (UTRA FDD) with one carrier frequency,
- UMTS Terrestrial Radio Access (UTRA FDD) with at least two carrier frequencies,
- UMTS Terrestrial Radio Access (UTRA TDD) with one carrier frequency,
- UMTS Terrestrial Radio Access (UTRA TDD) with at least two carrier frequencies,
- Global System for Mobile Communication GSM,
- a Code division multiple access (CDMA) as CDMA2000 1x,
- High Rate Packet Data (HRPD).
- etc.

Thus, the present invention is adapted to be coupled with different types of Radio Access Technologies (RAT) and does not involve a supplemental complexity depending on the considered Radio Access Technology.

According to another embodiment, said Low-mobility frequency for cell measurements is implemented by extending the Discontinuous Reception (DRX) cycle length, delivering a "Low-mobility Discontinuous Reception cycle length".

Such an embodiment is for example implemented by using a table associating a mobility state and a corresponding DRX, the "Low discontinuous Reception cycle length" of a Low-mobility state being larger than the one associated with a Normal-mobility state. According to another example, it is also possible that such a "Low discontinuous Reception cycle length" can be for example implemented by default in a user equipment, and/or entered by the user and/or an operator, or according to another example sent through a broadcast message or dedicated signalling (Radio Resource Control (RRC) messages).

It can also be applied by multiplication of the Discontinuous Reception (DRX) cycle length corresponding to the Normal-mobility state by the fourth predetermined factor sf-Low$_{DRX}$ >1, with sf-Low$_{DRX}$ being an integer or a real number.

Or according to another example, the "default" DRX associated with the "Normal-mobility" state can be changed by a higher DRX associated with the "Low-mobility" state of the present invention and called a "Low-mobility DRX".

Such embodiment has the advantage of enhancing the battery life time even more because a user equipment would listen for Paging Occasions less often either, a Paging Occasion corresponding to the time instances where it is possible to receive initial paging information, as defined in the 3$^{rd}$ Generation Partnership Project (3GPP).

According to another embodiment, when said at least one user equipment is in an active mode:

- said cell measurements correspond to handover measurements and/or handover reporting, and
- said method further comprises, the step of launching said handover measurements (261) and/or said handover reporting (262) at said Low-mobility frequency for handover measurements and/or handover reporting.

Indeed, the Low-mobility state according to the invention consists, when being in the active mode, in lowering the number of operations implemented by the user equipment regarding handover measurements and/or handover reporting.

Advantageously, said handover measurements comprise at least one of the following sub-steps belonging to the group comprising:

- identifying a new detectable cell performed at a low-mobility frequency for identifying a new detectable cell equal to a default frequency for identifying a new detectable cell for said Normal-mobility state in active mode, divided by a predetermined factor sf-Low$_{Identify}$>1,
- reporting criteria measurements performed at a low-mobility frequency for reporting criteria measurements equal to a default frequency for reporting criteria measurements for said Normal-mobility state in active mode, divided by a predetermined factor sf-Low$_{measure}$>1,
- performing gap-assisted measurements at a low-mobility frequency for gap-assisted measurements equal to a default frequency for gap-assisted measurements for said Normal-mobility state in active mode, divided by a predetermined factor sf-Low$_{gap}$>1.

Thus, it can be noted that in this variant, lowering the frequency of the handover measurements is really easy to implement, since a simple multiplication is implemented. Such factors sf-Low$_{Identify}$, sf-Low$_{measure}$, or sf-Low$_{gap}$ can be for example implemented by default in a user equipment, and/or entered by the user and/or an operator, or according to another example sent through a broadcast message or user dedicated signalling (Radio Resource Control (RRC) messages).

According to an embodiment, said method further comprises a step of informing said network about a current mobility state of said user equipment during a connection establishment procedure or by sending user equipment assistance information to the network.

Indeed, the Low-mobility state can be implemented in the active mode according to two possible implementations.

On the one hand, the user equipment is autonomous, in other words the user equipment implements itself all the active mode operations by reducing their frequency to obtain the Low-mobility frequency characterizing the low mobility state. In this autonomous embodiment the network nodes are not thus aware of the Low-mobility state that is implemented by the user equipment itself. As a consequence, the fact that the user equipment is in a Low-mobility state is transparent, in other words unnoticeable, for the other nodes of the network.

On the other hand, the user equipment informs the network about its "Low-mobility" state e.g. during a connection establishment procedure (e.g in RRC connection Request or RRC Connection setup Complete message) or by sending UE assistance information to the network. Thus, the network is aware of the fact that the User equipment is in Low-mobility state, and can take this fact into consideration when configuring measurements using classical RRC Connection Reconfiguration message.

Advantageously, said Low-mobility frequency for handover reporting is implemented using at least one of the following sub-steps belonging to the group comprising:

- in case of event triggered reporting:

  • decreasing the parameter corresponding to the amount of reports (ReportAmount) by multiplying it by a predetermined factor sf-Low$_{ReportAmount}$<1,
  • extending the parameter corresponding to the period of time between reports (ReportInterval) by multiplying it by a predetermined factor $sf\text{-}Low_{ReportInterval} > 1$,

- extending the parameter corresponding to the trigger time (TimeToTrigger) by multiplying it by a predetermined factor $sf\text{-}Low_{TimeToTrigger} \geq 1$,

  - in case of periodic triggered reporting:

    - extending the parameter corresponding to the period of time between reports (ReportInterval) by multiplying it by a predetermined factor $sf\text{-}Low_{ReportInterval} > 1$.

Thus, it can be noted that in this variant, lowering the frequency of the handover reporting is really easy to implement, since a simple multiplication is implemented. Such factors $sf\text{-}LoW_{ReportAmount}$, $sf\text{-}Low_{ReportInterval}$ or $sf\text{-}Low_{TimeToTrigger}$ can be for example implemented by default in a user equipment, and/or entered by the user and/or an operator, or according to another example sent through a broadcast message or user dedicated signalling (Radio Resource Control (RRC) messages).

It can be noted that according to a preferred variant the factor $sf\text{-}Low_{ReportInterval}$ is common to the case of event triggered reporting and to the case of periodic triggered reporting.

According to another variant, two different factors $sf\text{-}Low_{ReportInterval}$ and $sf\text{-}Low_{ReportInterval\_p}$ can be used respectively for the cases where event triggered reporting is used or where periodic triggered reporting is used.

According to another embodiment, when being in said Low-mobility state, if a cell reselection or handover is performed, the mobility state of said user equipment is changed to another mobility state belonging to the group comprising:

- Normal-mobility state,
- Medium-mobility state, if the number of cell reselections exceeds a first predetermined threshold after expiration of a second predetermined timer,
- High-mobility state, if the number of cell reselections exceeds a second predetermined threshold after expiration of said second predetermined timer, said predetermined threshold being strictly superior to said first threshold,
- etc.

Thus, the invention implements an automatic change of mobility state, in order to adapt the mobility state as a function of the user's motion when he leaves a cell where he was spending time before.

For example, a change from a "Low-mobility" state, either in idle or active mode, according to the invention to a "Normal-mobility" state for example involves that the Low-mobility measurements frequency is changed to a default mobility measurement frequency. Indeed, in the "Low-mobility" state according to the invention, the launch of cell measurements by the user equipment has a frequency, which is superior to the frequency of the other mobility states, which allows a user equipment to decrease its power consumption.

In different modes of implementation, either in idle or active mode, said method comprises also the preliminary steps of:

- detecting said user equipment inside a current cell;
- checking if said current cell belongs to a predetermined list of cells in which said Low-mobility state is considered as a default state for said user equipment;
- when said current cell belongs to said predetermined list of cells, decreasing said first predetermined timer.

Such implementation permits indeed to benefit from the location of the user equipment in a cell, which is most of the time associated with a "Low-mobility" state of the user.

When such a cell is identified using a list of cells in which said Low-mobility state is considered as a default state for said user equipment (UE), said first predetermined timer is decreased. Indeed, when the current cell of the user equipment is identified among said list of cells in which said Low-mobility state is considered as a default state for the user equipment (UE), there is no need to wait all the time of said first predetermined timer. Thus, in this particular case, the present invention aims at decreasing said predetermined timer.

In a particular variant of this embodiment, said predetermined list of cells is entered by a user of said user equipment and/or by an operator and/or by a network equipment and comprises the cells belonging to the group comprising:

- the home cell of the user,
- the office cell of the user,
- a vacation home or apartment cell of the user,

- a cell entered by a user and/or the operator and/or network equipment when it is considered that said user spends a time superior to said first predetermined timer in said cell.

In a particular embodiment, said step of detecting comprises also a substep of determining that an idle mode would be more efficient in terms of power consumption than a connected mode for the user equipment. Idle mode is usually more efficient than connected mode. Indeed, connected mode is used only when data needs to be transmitted or when voice call is ongoing; the rest of the time a User Equipment (UE) is in idle mode.

The invention also relates to a cell mobility measurement module for performing cell measurements of at least one user equipment in a cellular network. Such a mobility cell measurement module comprises:

- a detector for detecting an absence of cell reselection or handover after expiration of a first predetermined timer,
- a trigger for setting the user equipment to a Low-mobility state wherein a frequency for cell measurements, called a Low-mobility frequency for cell measurements, is reduced in comparison with a frequency for cell measurements of a default state of said user equipment, called a Normal-mobility state.

A cell mobility measurement module of this kind is especially adapted for implementing the method for performing cell measurements described here above in a Low-mobility state.

Advantageously, the cell mobility measurement module for performing cell measurements according to the present invention comprises also means for being connected to or integrated in a user equipment.

Such a cell mobility measurement module can be indeed connected to or integrated in an existing user equipment. Thus, thanks to such a cell mobility measurement module it is possible to implement the "Low-mobility" state according to the invention without modifying said existing user equipment. Such a cell mobility measurement module permits also to apply the "Low-mobility" state of the present invention as an option depending of the needs of the user. For example, during a business travel or during holiday, it is possible that the user does not wish to use such a Low-mobility state, which he considers more adapted for his day life.

The invention also pertains to a computer program comprising instructions to implement the method for performing cell measurements described here above when the program is executed by a processor.

## 5. List of Figures

Other features and advantages of the invention shall appear more clearly from the following description of a preferred embodiment of the invention, given by way of a simple illustrative and non-exhaustive example, and from the appended drawings of which:

- Figure 1, commented upon with reference to the prior art, is a diagram extracted from the technical specification TS 36.331 defined in the 3rd Generation Partnership Project (3GPP);
- Figure 2 is a simplified flowchart of the method of the invention;
- Figures 3A and 3B illustrate respectively the mobility state diagram in an idle mode according to the prior art and to the present invention;
- Figure 4 is a simplified flowchart describing the steps implemented by another embodiment of the method of the invention;
- Figure 5 is a simplified flowchart describing, according to another embodiment, some preliminary steps, which are implemented before the steps of Figure 2;
- Figure 6 illustrates the mobility state diagram when switching from an idle mode to an active mode according to the present invention,
- Figure 7 illustrates an example of event scenario that triggers handover measurements and reporting,
- Figures 8 schematically illustrate the structures of a cell mobility measurement module for performing cell measurements of at least one user equipment in a cellular network, implementing an embodiment of the invention,
- Figure 9 illustrates the mobility state diagram in an active mode according to the present invention when a handover occurs.

## 6. Description of a preferred embodiment of the invention

### 6.1 Definition and abbreviations

In the present invention, the following abbreviations and definitions are used:

- For an idle mode or an active mode:

- Intra-frequency measurements: these are the measurements which are performed for the neighbouring cells which work on the same frequency as the current serving cell in which the user equipment is present;
- Inter-frequency measurements: these are the measurements which are performed for the neighbouring cells which work on frequency other than that of a currently serving cell, but on the same Radio Access Technology;
- Inter-RAT measurements: these are measurements, which are performed for the neighbouring cells which work on different RAT (Radio Access Technology) than the one of the current serving cell, i.e. if the work is on LTE, but there are UMTS or GSM neighbouring cells, these cells are also measured;
- DRX stands for Discontinuous Reception - this is a standardized mechanism, which is used to save battery life in LTE. When configured with DRX, the device wakes up to read the signalling information and perform measurements only at certain times (e.g. every 1.28 seconds) and it "sleeps" for the rest of the time (turns off its receiver to conserve battery life);

- For an idle mode

- RSRP (Reference Signal Received Power) and RSRQ (Reference Signal Received Quality) are the parameters defined in the standard and which are used for channel quality estimation and are used also as a criterion for cell reselection and handover decisions;
- RRC IDLE mode: a user equipment is in such mode when it is not transmitting and receiving any user data. There are still certain tasks, which have to be performed by a user equipment in this mode like e.g. cell measurements and cell reselection. When a user equipment needs to receive or transmit user data it goes from RRC IDLE to RRC Connected mode using a connection establishment procedure;
- $T_{measure,xxx}$ (xxx depending on the used technology) these are timers, which define how often a user equipment shall perform certain measurements in the idle mode, e.g. $T_{measure,EUTRAN\_Inter}$ defines the periodicity of E-UTRAN (LTE) inter-frequency measurements, $T_{measureUTRA}$ defines the periodicity of measurements of UTRA (UMTS) neighbouring cells etc.

It has to be noted that all above $T_{measure,xxx}$ parameters are directly coupled with DRX cycle length configured for a user equipment. Indeed, the longer the duty cycle the longer are particular $T_{measure,xxx}$ values and therefore the less often a user equipment has to perform measurements.

Additionally a user equipment may be configured with $T_{reselection,RAT}$ timer for each Radio Access Technology RAT type which specifies the time interval during which a targeted cell shall fulfil cell reselection criteria in order to be reselected to by a user equipment. If this timer is set to 0, then a user equipment uses another timer $T_{evaluate,RAT}$, which is defined in the Technical Specification TS 36.133 (which is an integral part of the present invention) and which is proportionally dependent on the length of DRX cycle length.

For intra-frequency and equal priority inter-frequency cell reselection a cell-ranking is used to enhance a decision of cell choice.

The ranking for cell reselection is defined as follows by the Technical Specification TS 36.304:
the cell-ranking criterion $R_s$ for serving cell and $R_n$ for neighbouring cells is defined by:

$$R_s = Q_{meas,s} + Q_{Hyst}$$

$$R_n = Q_{meas,n} - Qoffset$$

where:

| Qmeas | RSRP measurement quantity used in cell reselections. |
| --- | --- |
| Qoffset | For intra-frequency: Equals to $Qoffset_{s,n}$, if $Qoffset_{s,n}$ is valid, otherwise this equals to zero. For inter-frequency: Equals to $Qoffset_{s,n}$ plus $Qoffset_{frequency}$, if $Qoffset_{s,n}$ is valid, otherwise this equals to $Qoffset_{frequency}$. |

A cell reselection shall be performed to highest ranked cell provided that this cell is better ranked than the serving cell during a time interval $T_{reselectionRAT}$ and more than 1 second elapsed since the UE camped on a currently serving cell.

• For an active mode:

In the active mode a considered User Equipment (UE) performs a handover procedure.

The term "handover" refers to as series of procedures in which if a cell (serving cell) where a User Equipment is currently located is changed due to mobility of the User Equipment, the User Equipment can continuously receive the current dedicated data/control channels even in the new cell (target cell).

To achieve a handover, a specific handover procedure is performed. The handover procedure comprises two groups of steps: the steps performed before the handover, and the ones performed after.

Concerning the steps performed before the handover the following classical mechanism is implemented:

- the source cell node (eNodeB) configures the user equipment measurement procedures according to the area restriction information ("RRC Connection Reconfiguration" command is sent from the base station of the source cell to the user equipment),
- the user equipment performs measurements of physical layer,
- the user equipment sends back measurement values ("Measurement Report" message is sent from the user equipment to the base station of the source cell).

After the base station of the source cell receives "Measurement Report", it makes a decision (based on information from report) to make handover of the user equipment or not. Handover will be performed when values of measurements of serving cell becomes low (weak signal), or when values of measurements of neighbouring cell becomes high (strong signal), or when handover criterions are met.

If decision is positive, further handover steps are executed to perform handover of user equipment from a source cell (or serving cell) to a target cell. These procedures groups of handover mechanism are named:

• Handover preparation,
• Handover execution ("RRC Connection Reconfiguration" command is sent),
• Handover completion ("RRC Connection Reconfiguration Complete" message is sent). If handover decision is negative, handover of the user equipment is not performed.

More precisely, in active mode, decision about the handover of the user equipment is based on measurements of the physical layer of the user equipment and is made by the network.

In LTE E-UTRAN measurements to be performed by a user equipment for mobility are classified as described above regarding Intra-frequency E-UTRAN measurements, Inter-frequency E-UTRAN measurements, Inter-RAT measurements.

In LTE E-UTRAN intra/inter-frequency measurements performed by a user equipment can be controlled by the base station of the serving cell, using broadcast or dedicated control.

In active state, called RRC_CONNECTED state, a user equipment follows the measurement configurations specified by RRC directed from the base station of the serving cell (eNodeB).

A classical message suitable for this purpose is "RRCConnectionReconfiguration". It contains "MeasConfig" information element, which can be used by the base station of the serving cell to configure user equipment measurements.

MeasConfig specifies measurements to be performed by the user equipment, and covers intra-frequency, inter-frequency and inter-RAT mobility as well as configuration of measurement gaps. It includes fields, which allow to add measurement identities to the list, to modify measurement identities on the list, to remove measurement identities from the list, or to setup a quality threshold controlling whether or not the user equipment is required to perform measurements, setup and release measurement gaps.

If the user equipment requires measurement gaps to identify and measure inter-frequency and/or inter-RAT cells, the E-UTRAN must provide a single measurement gap pattern with constant gap duration for concurrent monitoring of all frequency layers and RATs. Gap Pattern Configurations supported by the user equipment as described in the Technical Specification TS 36.133 and TS 36.331.

During the RRC_CONNECTED mode, in other words the active mode, the user equipment shall continuously search for and identify new cells. For such an identifying step, various $T_{identify\_xxx}$ timers ($_{xxx}$ depending on the used technology) are used and define the duration within which the user equipment shall be able to identify a new detectable cell, e.g. $T_{identify\_intra}$ defines this duration for E-UTRAN (LTE) intra-frequency cells, $T_{identify\_inter}$ defines this duration for E-UTRAN (LTE) inter-frequency cells, $T_{identify,UTRA\_FDD}$ defines this duration for Inter RAT cells: E-UTRAN FDD - UTRAN FDD, $T_{identify,UTRA\_TDD}$ defines this duration for Inter RAT cells: E-UTRAN FDD - UTRAN TDD, etc.

It has to be noted that as described in the Technical Specification TS 36.133 and TS 36.331, all above $T_{identify,xxx}$ parameters values depend on whether Discontinuous Reception (DRX) is used. Indeed, when a Discontinuous Reception (DRX) is used, their values are directly coupled with DRX cycle length configured for a user equipment. Indeed, the longer the duty cycle the longer are particular $T_{identify,xxx}$ values and therefore the less often a user equipment has to perform measurements.

<u>Concerning the reporting for handover, the user equipment</u> provides values of performed physical layer measurements to the base station of the serving cell (eNodeB), which uses them to decide when handover of <u>the user equipment</u> is necessary.

As mentioned in the Technical Specification TS 36.331, which is an integral part of the present invention, there are various reporting scenarios, which can be configured by setting parameters values of "ReportConfigEUTRA" information element. Triggering type of measurements reports is set in "triggerType" parameter. There are two types of triggering: event triggering and periodic triggering.

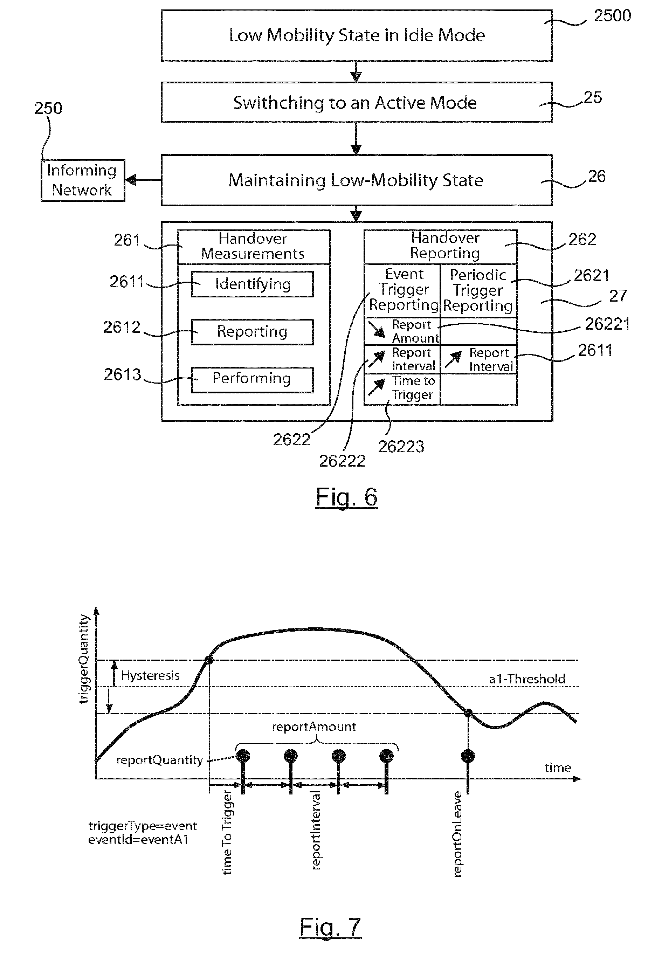

An example of event called "serving becomes better than threshold" used for event triggering is illustrated by figure 7. Such an event is characterized by the following conditions: Entering condition: *Ms - Hys > Thresh,* Leaving condition: Ms + *Hys < Thresh,* where: *Ms* is the measurement result (RSRP or RSRQ) of the serving cell, not taking into account any offsets, *Hys* is the hysteresis parameter for this event, *Thresh* is the threshold parameter for this event.

More precisely, in case of event triggering, there are seven events: A1, A2, A3, A4, A5, A6, B1, B2. Each event has its own parameters like: Thresholds ("a1-Threshold", "a2-Threshold", "a4-Threshold", "a5-Threshold1", "a5-Threshold2"), Offset ("a3-Offset"), Hysteresis ("hysteresis"). Additional parameters for event triggered reporting are: amount of reports parameter ("reportAmount") and trigger time parameter ("timeToTrigger"). Available values of "reportAmount" are: r1, r2, r4, r8, r16, r32, r64, infinity. Available values of "timeToTrigger" are: ms0, ms40, ms64, ms80, ms100, ms128, ms160, ms256, ms320, ms480, ms512, ms640, ms1024, ms1280, ms2560, ms5120).

In case of periodic triggering, most important parameter is "ReportInterval", which is a period of time between reports. Available values are: ms120, ms240, ms480, ms640, ms1024, ms2048, ms5120, ms10240, min1, min6, min12, min30, min60..

This parameter "ReportInterval" can be applied also to event triggered reporting.

*6.2 Main aspects of the invention*

The invention proposes a novel approach to reduce the power consumption of user equipment when it is static or moves inside a same cell, called a current cell.

The general principle of the invention relies on defining and implementing a new mobility state, called a "Low-mobility" state.

Such a new definition is necessary considering that "Medium-mobility" and "High-mobility" states enhanced the network performance for user equipment moving faster than in the state of Normal-mobility, and since their corresponding mechanisms influence the speed of user equipment decision to change the serving cell, the same modification as defined in "Medium-mobility" and "High-mobility" states would not make sense for user equipment, which are not moving at all or are moving within one cell and thus are not performing cell reselections.

By defining a "Low-mobility" state in a different way according to the present invention, the power consumption of a user equipment can be substantially reduced and thus the battery lifetime is extended.

More precisely, the principle of the "Low-mobility" state is to decrease the number of implemented measurements and reporting. Thus, the frequency of measurements and reporting implemented whether in idle or in active mode is reduced in comparison with one related to the Normal-mobility state. Lowering the frequency of cell measurements means reducing the frequency but not stopping the cell measurements, in other words Lowering the frequency of cell measurements does not mean setting the frequency to zero. By not stopping the cell measurements, the present method allows continuation of the cell measurements without having to add an additional process to resume such measurements, if it had been stopped.

In other words, the rules imposed by a "Low-mobility" state aim at increasing the period between each operation performed by a user equipment, in order to reduce the total amount of operations and thus reduce the power consumption of the user equipment.

*6.3 Main aspects of the invention when the user equipment is in idle mode*

To this end, the invention implements, when the user equipment is either in idle mode 2300 or in active mode 2600, the method as illustrated in Figure 2, which comprises the following steps of:

- detecting (21) an absence of cell reselection or handover after expiration of a first predetermined timer,
- setting (22) the user equipment to a Low-mobility state wherein a frequency for cell measurements, called a Low-mobility frequency for cell measurements, is reduced in comparison with a frequency for cell measurements of a default state of said user equipment, called a Normal-mobility state.

For example, when the user equipment is in an idle mode 2300:

- the cell measurements correspond to cell reselection measurements and comprise at least serving cell measurements (231), and
- the method according to the invention further comprises, the following steps of:
- launching (23) said cell measurements at said Low-mobility frequency for cell measurements,
- evaluating cell (24) reselection criteria at said Low-mobility frequency for cell measurements.

Similarly, when the user equipment is in an active mode 2600:

- the cell measurements correspond to handover measurements (261) and/or handover reporting (262), and
- the method according to the invention further comprises, the step of launching (27) said handover measurements (261) and/or said handover reporting (262) at said Low-mobility frequency for handover measurements and/or handover reporting.

More details about the step of launching implemented in the active mode are later described in view of figure 6.

Thus, the "Low-mobility" state is detected (21) by a user equipment using similar rules as it happens in the case of "Medium-mobility" and "High-mobility" states, in other words if a user equipment does not perform any cell reselection during a first predetermined timer $T_{LM}$ it should enter "Low-mobility" state, that is to say that the user equipment is set to a "Low-mobility" state.

According to a particular feature of the invention, the step of detecting (21) comprises also a substep of determining (210) that an idle mode (2101) would be more efficient in terms of power consumption than a connected mode (2102) for a user equipment.

Indeed, for mobility purposes, it is much more efficient to keep the user equipment in the idle state, where only cell reselection occurs while the user equipment is moving, rather than a complete handover procedure from cell to cell during mobility.

Contrary to the well-known "Normal-mobility", "Medium-mobility" and "High-mobility" states, in the "Low-mobility" state according to the invention, a user equipment performs, in other terms launches (23), cell reselection measurements less often using scaling rules defined below. Indeed, there are separate rules defined for measurements for serving cell, intra-frequency, inter-frequency and inter-RAT cells.

For the serving cell, in other terms the current cell in which the user equipment is, the user equipment shall measure during the serving cell measurements (231) the Reference Signal Received Power (RSRP) and Reference Signal Received Quality (RSRQ) parameters level of the serving cell and evaluate the cell selection criterion S (criterion S indicating if the given cell should be considered in a cell ranking at all) defined in the Technical Specification TS 36.304 for the serving cell at least every [sf-Low$_{serving}$ * (DRX cycle length)] instead of every DRX cycle, with sf-Low$_{serving}$ > 1.

The factor sf-Low$_{serving}$ can be an integer or a real number.

If the serving cell fulfils Srxlev > $S_{IntraSearchP}$ and Squal > $S_{IntraSearchQ}$, the user equipment shall not perform intra-frequency measurements (232).

If the serving cell fulfils Srxlev > $S_{nonIntrasearchP}$ and Squal > $S_{nonIntraSearchQ}$, the user equipment shall not perform E-UTRAN inter-frequency (233) or inter-RAT frequency measurements (234) of equal or lower priority according to the Technical specification TS 36.304.

If above criteria are not met for the serving cell, a user equipment shall perform cell measurements and/or search for higher, equal or lower priority inter-frequency layers and/or search for higher or lower priority inter-RAT layers following the rules specified in the Technical Specification TS 36.133, but applying following scaling rules:

- Multiply $T_{measure,EUTRAN\_Intra}$, $T_{measure,E-UTRAN\_Inter}$, $T_{measureRAT}$ timers by Sf-Low$_T$ factor for respectively performing the intra-frequency cell measurements (232), inter-frequency cell measurements (233), intra-RAT cell measurements (234), where sf-Low$_T$ >1,
- Multiple $T_{higher\_priority\_search}$ parameter by sf-Low$_{search}$ for performing a search (235) for higher priority inter-frequency cells, where sf-Low$_{search}$>1 and thus increasing a minimum rate at which user equipment (UE) is required to perform search for this type of layers.
- Multiply any other parameters determining periodicity of launching of higher, equal or lower priority inter-frequency or inter-RAT layers search by sf-Low$_{search}$, where sf-Low$_{search}$>1 and thus increasing a minimum rate at which UE is required to perform search for this type of layers.

The factors sf-Low$_T$ and sf-Low$_{search}$ can be an integer or a real number.

Depending on which Radio Access Technology (RAT) types are supported by the user equipment $T_{measureRAT}$ can be one or multiple of the following parameters defined in TS 36.133: $T_{measureUTRA\_FDD}$, $T_{measureUTRA\_TDD}$,

$T_{measure,GSM}$, $T_{measureHRPD}$, $T_{measureCDMA2000\_1X}$.

More precisely, in the presented "Low-mobility" state, intra-frequency E-UTRAN cells measurements are performed when Srxlev < $S_{IntraSearchP}$ or Squal < $S_{IntraSearchQ}$ for the serving cell. They are then performed at least every $T_{measure,E-UTRAN\_Intra}$ multiplied by sf-Low$_T$.

More precisely, in the presented "Low-mobility" state, inter-frequency E-UTRAN cells measurements are performed in two cases:

- If a user equipment is not in the highest priority carrier at the moment and if Srxlev > $S_{nonIntraSearchP}$ and Squal > $S_{nonIntraSearchQ}$ for the serving cell then user equipment shall search for higher priority inter-frequency layers at least every $T_{higher\_priority\_search}$ multiplied by sf-Low$_{search}$. When cells of higher priority are found by the user equipment then they shall be measured at least every $T_{measure,E-UTRAN\_Inter}$ multiplied by sf-Low$_T$.
- if Srxlev $\leq S_{nonIntraSearchP}$ or Squal $\leq S_{nonIntraSearchQ}$ for the serving cell, user equipment shall search for and measure configured inter-frequency layers of higher as well as equal or lower priority with an increased periodicity, which is equal to the one defined in TS 36.133 multiplied by sf-Low$_{search}$. The measurements in this case take place every $T_{measure,E-UTRAN\_Inter}$ multiplied by sf-Low$_T$ for identified higher priority cells and every $K_{carrier} * T_{measure,EUTRAN\_Inter}$, multiplied by sf-Low$_T$ for identified cells of equal or lower priority, where $K_{carrier}$ is the number of E-UTRA inter-frequency carriers identified by the serving cell.

More precisely, in the presented "Low-mobility" state, inter-RAT cells measurements are performed in two cases:

- If Srxlev > $S_{nonIntraSearchP}$ and Squal > $S_{nonIntraSearchQ}$ for the serving cell then the user equipment shall search for inter-RAT layers of higher priority at least every $T_{higher\_priority\_search}$ multiplied by sf-Low$_{search}$. When cells of higher priority are found by the user equipment then they shall be measured at least every $T_{measureRAT}$ multiplied by sf-Low$_T$.
- If Srxlev $\leq S_{nonIntraSearchP}$ or Squal $\leq S_{nonIntraSearchQ}$ for the serving cell then the user equipment shall search for and measure inter-RAT layers of higher, lower priority in preparation for possible reselection with an increased periodicity, which is equal to the one defined in TS 36.133 multiplied by sf-Low$_{search}$. The measurements in this case take place every $T_{mesureRAT}$ multiplied by sf-Low$_T$ ($T_{measureRAT}$ and precise formula for this rate depends on RAT type, which can be either UTRA, GSM, cdma2000 1x or HRPD). In case of UTRA systems the measurements should take place every ($N_{UTRA\_carrier}$) * $T_{mesureUTRA\_FDD}$ multiplied by sf-Low$_T$ for UTRA FDD or ($N_{UTRA\_carrier\_TDD}$) * $T_{mesureUTRA\_TDD}$ multiplied by sf-Low$_T$ for UTRA TDD, where $N_{UTRA\_carrier}$ and $N_{UTRA\_carrier\_TDD}$ are the number of UTRA carriers in the neighbour frequency list respectively in UTRA FDD and in UTRA TDD.

Performed measurements shall be used to evaluate the intra-frequency, inter-frequency and inter-RAT cell reselection criteria defined in TS 36.304 at least every sf-Low$_{serving}$ * (DRX cycle length).

*6.3.1 Example of implementation*

An hypothetic, but realistic situation in mobile operator's network is presented below for a user equipment implementing a Low-mobility state in idle mode according to the invention.

The user equipment supports for example two types of Radio Access Technologies (RAT): E-UTRA with two carrier frequencies supported and UTRA FDD with one carrier frequency supported. It has a subscription in operator's X network for both of these RATs, where layers' priorities are as follows: E-UTRA carrier frequency 1, E-UTRA carrier frequency 2, UTRA FDD carrier frequency 1.

After power on, a user equipment selects a cell to camp on following standardized rules. It turns out that E-UTRA carrier frequency 1 is not available, so a user equipment camps in the cell working on E-UTRA carrier frequency 2. After that procedure, it reads System Information, which contains among others values of such parameters, which are applied by a user equipment:

defaultPagingCycle = rf64 (64 radio frames, which equals to 0.64 seconds),
$K_{carrier}$ = 1 (the number of E-UTRA inter-frequency carriers identified by the serving cell),
$N_{UTRA\_carrier}$ = 1 (the number of UTRA carriers in the neighbour frequency list),
sf-Low$_{serving}$ = 16 (Low-mobility state parameter),
sf-Low$_T$ = 32 (Low-mobility state parameter),
sf-Low$_{search}$ = 8 (Low-mobility state parameter),
$T_{LM}$ = 10 minutes (Low-mobility state parameter).

It can be noted that sf-Low$_{serving}$, sf-Low$_T$, sf-Low$_{search}$ and $T_{LM}$ parameters are new parameters introduced specially for the purpose of "Low-mobility" state processes. They shall be passed to a user equipment using either System Information and/or dedicated signalling.

Based on configured DRX cycle length, a user equipment applies such values for the following classical parameters with which they are associated and as specified in the Technical Specification TS 36.133, which is an integral part of the present invention:

$T_{measure,EUTRAN\_Intra}$ = 1.28 s (2 times DRX cycle length),
$T_{measure,E-UTRAN\_Inter}$ = 1.28 s (2 times DRX cycle length),
$T_{higher\_priority\_search}$ = 60 s (60s for each higher priority carrier frequency),
$T_{measureUTRA\_FDD}$ = 5.12 s (8 times DRX cycle length).

As proper information was not present in System Information and user equipment also applies by default values for following parameters as specified in the Technical Specification TS 36.331, which is an integral part of the present invention:

$S_{IntraSearchP}$ = infinity,
$S_{IntraSearchQ}$ = 0 dB,
$S_{nonIntraSearchP}$ = infinity,
$S_{nonIntraSearchQ}$ = 0 dB.

Afterwards a user equipment starts countdown timer TLOW with value equal to said first predetermined timer $T_{LM}$. User equipment is now in RRC IDLE mode and in its default mobility state, which is Normal-mobility state. It is therefore performing measurements according to the rules specified in TS 36.133 and TS 36.304, which are integral parts of the present invention:

In the conditions described above and given above parameters a user equipment performs thus such measurements:

- serving cell measurements (231) are performed every 0.64 s (once per DRX cycle),
- Intra-frequency cell measurements (232) are performed every 1.28 s (once per $T_{measure,EUTRAN\_Intra}$),
- a user equipment performs search for higher priority inter-frequency cells every 60 s ($T_{higher\_priority\_search}$); during the search 2 inter-frequency cells of higher priority were identified
- a user equipment performs E-UTRA inter-frequency measurements for each identified inter-frequency cell every 1.28 s ($T_{measure,E-UTRAN\_Inter}$ * $K_{carrier}$)
- a user equipment performs UTRA FDD inter-RAT measurements every 5.12 s ($T_{measureUTRA\_FDD}$ * $N_{UTRA\_carrier}$).

According to this example, a user equipment performs also evaluation of all relevant reselection criteria each 0.64 s (each DRX cycle).

After 10 minutes timer TLOW reaches 0 and it turns out that the user equipment did not perform any cell reselection during that time, because the serving cell was still the best one according to the Cell Reselection criteria as described in TS 36.304. Therefore, the user equipment enters Low-mobility state. Starting from that moment, the user equipment performs cell measurements according to the rules specified for Low-mobility state i.e.:

- serving cell measurements are performed every 10.24 s (DRX cycle length * sf-Low$_{serving}$)
- intra-frequency cell measurements are performed every 40.96 s ($T_{measure,EUTRAN\_Intra}$ * sf-Low$_T$)
- a user equipment performs search for higher priority inter-frequency cells every 8 minutes ($T_{higher\_priority\_search}$ * Sf-Low$_{search}$); during the search 2 inter-frequency cells of higher priority were identified
- a user equipment performs E-UTRA inter-frequency measurements for each identified inter-frequency cell every 40.96 s ($T_{measure,E-UTRAN\_Inter}$ * $K_{carrier}$ * sf-Low$_T$)
- a user equipment performs UTRA FDD inter-RAT measurements every 163.84 s ($T_{measureUTRA\_FDD}$ * $N_{UTRA\_carrier}$ * sf-Low$_T$).

A user equipment performs also evaluation of all relevant reselection criteria each 10.24 s (each DRX cycle * sf-Low$_{serving}$).

During the next twelve hours a user equipment does not change its position and does not perform cell reselection. Measurements are constantly performed using the rules specified for Low-mobility state, which enables reduction of power consumption during that time and conserves battery lifetime of a user equipment.

After twelve hours, user equipment is moved to another place and it decides about cell reselection. It automatically enters Normal-mobility state and follows cell measurements procedures without any scaling rules. Also timer TLOW is started again in order for user equipment to be able to detect Low-mobility state again.

*6.3.2 Mobility states and switching from a mobility state to another*

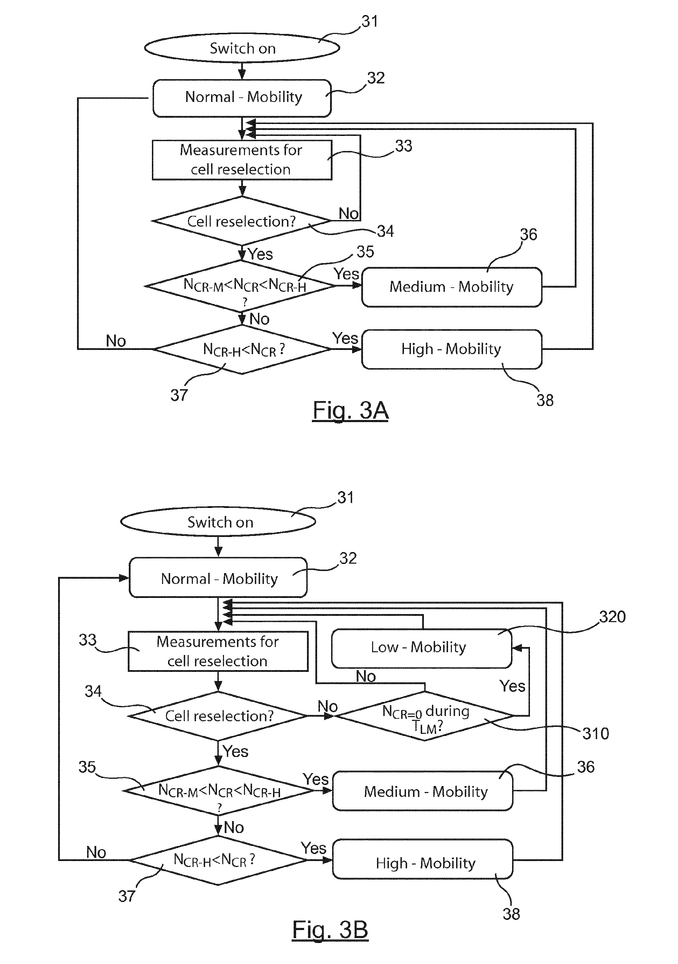

Figures 3A and 3B illustrate respectively the mobility state diagram in a RRC idle mode according to the prior art and to the present invention.

As can be seen, the insertion of a new mobility state involves changes (310, 320) in the user equipment behaviour.

Indeed, in the prior art represented by figure 3A, cell reselection procedure was already modified by speed dependant scaling rules, which are implemented by a user equipment when it enters High-mobility (38) or Medium-mobility (36) states (as opposed to Normal-mobility state (32)).

Scaling rules are implemented by sf-High or sf-Medium factor, which influence a value of $Q_{hyst}$ and $T_{reselectioRAT}$ as defined above.

LTE is optimized for user equipment moving with a velocity of up to 15 km/h. But it often happens that users are moving much faster while using a phone on a train or car. That is why the cell reselection procedure of the prior art has been optimized for this type of users.

As already mentioned, general rule is that in Medium-mobility (36) and High-mobility (38) states, a user equipment performs reselections faster than in Normal-mobility state, in other words the process of reselection is accelerated in these states.

More precisely, a mobility state in which a user equipment currently resides is determined by a number of cell reselections performed during a certain time $T_{CRmax}$, which is sent in system information. The faster a user equipment is moving, the faster cell reselections should be performed, to provide better connection quality.

Regarding figure 3B, the new cell reselection procedure is described below.

First, the user equipment is switched on (31) and by default the user equipment is in a "Normal-mobility" state (32). Then physical layer measurements for cell reselection are performed (33) and whether no, one, or several cell reselections (34) are required by such measurements, the user equipment enters or not a different mobility state.

If "no cell reselection or handover is required after expiration of a first predetermined timer $T_{LM}$" (310), the user equipment enters the "Low-mobility" state (320) according to the invention. On the contrary, if at least one cell reselection is detected (corresponding to the case "NO" of the test "no cell reselection is required after expiration of a first predetermined timer $T_{LM}$"), the user equipment remains in the "Normal-mobility" state (32).

Moreover, if the number of cell reselection $N_{CR}$ during $T_{CRmax}$ exceeds a first predetermined threshold $N_{CR\_M}$ and not exceeds a second predetermined threshold $N_{CR\_H}$ (with $N_{CR\_H} > N_{CR\_M}$) (35), the user equipment enters the "Medium-mobility" state (36). On the contrary, a second test (37) is performed and consists in evaluating if the number of cell reselection during $T_{CRmax}$ exceeds a second predetermined threshold $N_{CR\_H}$. In this last case the user equipment enters the "High-mobility" state (38), otherwise (corresponding to the case "NO" of the test "if the number of cell reselection during $T_{CRmax}$ exceeds a second predetermined threshold $N_{CR\_H}$") the user equipment remains in the "Normal-mobility" state (32). $N_{CR\_H}$ and $N_{CR\_M}$ are integers from the range of 1 to 16.

It has to be noted that a figure similar to figure 3B could be deduced for an active mode. Indeed, in the active mode the steps "measurement for cell reselection" (33) and "cell reselection?" (34) for the detection would be respectively replaced by the steps "handover measurements and/or handover reporting" and "handover?" for the detection.

*6.3.3 Other embodiments or variants*

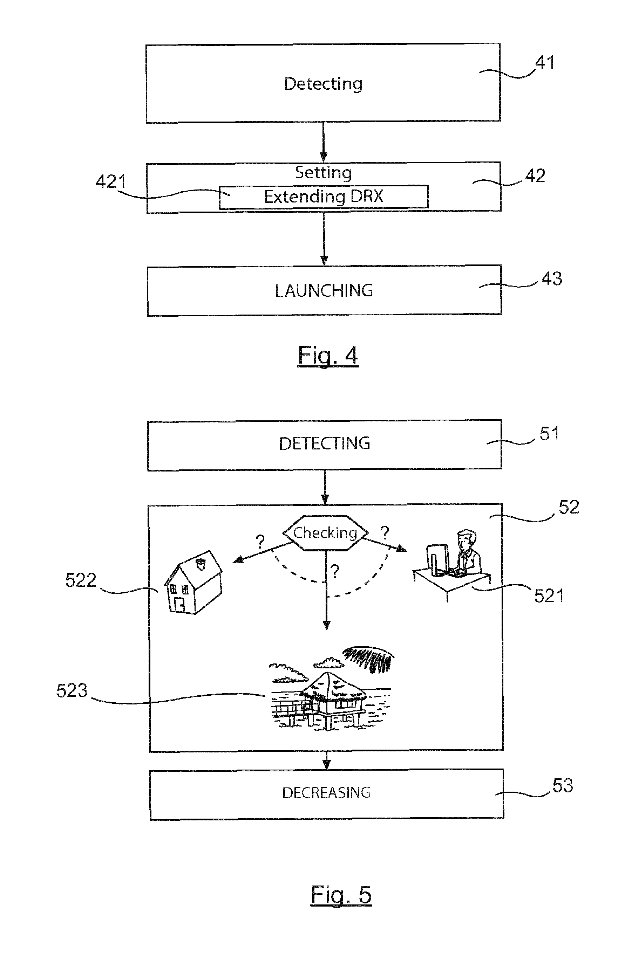

Figure 4 is a simplified flowchart describing the steps implemented by another embodiment of the method of the invention.

According to the invention, this embodiment comprises the following main steps of:

- detecting (41) an absence of cell reselection after expiration of a first predetermined timer $T_{LM}$,
- setting (42) the user equipment to a Low-mobility state where the frequency of cell measurements, called a Low-mobility frequency, is reduced in comparison with a frequency of cell measurements of a default state of said user equipment, called a Normal-mobility state,
- launching (43) said cell measurements at said Low-mobility frequency.

Such embodiment is an alternative of the embodiment described in the paragraphs above and consists essentially in reducing said Low-mobility frequency by extending (421) the Discontinuous Reception (DRX) cycle length, for example by applying a multiplication factor to the DRX cycle length itself.

Figure 5 is a simplified flowchart describing, according to another embodiment, some steps, which are implemented before the steps of Figure 2.

More precisely, according to this embodiment, the method according to the invention comprises also the preliminary steps of:

- detecting (51) said user equipment inside a current cell;
- checking (52) if said current cell belongs to a predetermined list of cells in which said Low-mobility state is considered as a default state for said User Equipment (UE);
- when said current cell belongs to said predetermined list of cells, decreasing (53) said first predetermined timer.

In particular, as represented by figure 5, such predetermined list of cells is entered by a user of said user equipment and/or by an operator and/or by a network equipment and comprises the cells belonging to the group comprising:

- the home cell (522) of the user,
- the office cell (521) of the user,
- a vacation home (523) or apartment cell of the user,
- a cell entered by a user and/or the operator when it is considered that said user spends a time superior to said first predetermined timer in said cell,
- etc.

*6.4 Main aspects of the invention when the user equipment is in active mode*

The invention proposes also to implement a continuity of the Low-mobility state, when switching either from the idle mode to the active or from the active mode to the idle mode.
Such a continuity, when switching, permits to avoids implementing again the steps of detecting and setting of the invention since the user equipment has not moved.
To this end, the invention implements, when the user equipment is in idle mode, the method as illustrated in Figure 6, which comprises the following steps of:

- switching (25) from said idle mode to an active mode wherein said user equipment is connected, exchanges some data and performs handover measurements,
- maintaining (26) the user equipment in said Low-mobility state wherein a frequency used for handover measurements (261) and/or handover reporting (262), called a Low-mobility frequency for handover measurements (261) and/or handover reporting (262) is reduced in comparison with a frequency of handover measurements (261) and/or handover reporting (262) of a default state of said user equipment in active mode, called a Normal-mobility state in active mode,
- launching (27) said handover measurements (261) and/or said handover reporting (262) at said Low-mobility frequency for handover measurements and/or handover reporting.

Thus, the "Low-mobility" state set (22) for a user equipment in idle mode is maintained (26) in the active mode. More precisely, "Low-mobility" state established in the idle mode can be maintained in the active mode according to the present invention.
Moreover, one of the advantages of the invention is that switching to the active mode does not involve a switch of mobility state. On the contrary, the "Low-mobility" state, which has been first established in the idle mode, is conserved in the active mode. Thus, as soon as the switch is done, a Low-mobility frequency for handover measurements and/or handover reporting is directly implemented, which permits to ensure, even in the active mode, a substantial power consumption reduction of a user equipment and thus battery lifetime is extended. Thus, there is no need to perform again a step of detecting an absence of cell reselection or handover (21) and a step of setting the user equipment to a low-mobility state (22) after the switch of active or idle mode since the user equipment has not moved.
Similarly, (but not represented) a "Low-mobility" state established in an active mode can also be maintained in the idle mode.
The invention provides two possible different embodiments to optimize power consumption in the active mode for a low-mobility user equipment by changing measurements periodicity and/or requirements and/or configuration and changing periodicity of measurements reports whether the Network is aware (250) or not (autonomous user equipment method) about the mobility state of the user equipment, and in particular the Low-mobility state according to the invention.

*6.4.1 "Autonomous User Equipment method" embodiment*

In this embodiment, when the user equipment, which is in Low-mobility state in idle mode (2500), changes its mode from idle to active, it does not inform network about its current mobility state. In other words, the user equipment will apply power optimizations measures itself, which the network nodes (eNodeB, core network nodes) are not aware of. These measures can correspond at least to one of the following behavior of the User Equipment:

- identifying (2611), in other words performing search and detection of new intra-frequency, inter-frequency and inter-RAT cells with relaxed performance requirements as compared to the ones described in the state of the art section according to two different variants:

  • applying sf-Low$_{Identify}$ scaling factor broadcasted in the System Information to the requirements to identify newly detectable intra-frequency, inter-frequency and inter-RAT cells as described for example in the Technical Specification TS 36.133, so that new requirements are equal to:

    ■ $T_{Identify\_intra}$ * sf-Low$_{Identify}$,
    ■ $T_{Identify\_Inter}$ * sf-Low$_{Identify}$,
    ■ $T_{Identify, UTRA\_FDD}$ * sf-Low$_{Identify}$,
    ■ $T_{Identify, UTRA\_TDD}$ * sf-Low$_{Identify}$

sf-Low$_{Identify}$ parameter having a value > 1 to increase the periodicity and thus decrease the number of implemented measurements.

The above list of parameters given as example is non-exhaustive, other parameters which may be influenced by the scaling factor sf-Low$_{Identify}$ described in measurement performance requirements for handover in the Technical specification TS 36.133 may also be chosen for specific implementations.

According to a first option, in order to limit the complexity of implementing a "Low-mobility" state a single sf-Low$_{Identify}$ parameter is used in common for each type of measurements.

According to a second option, different parameters could be used for different types of measurements (intra-frequency, inter-frequency, inter-RAT) and for different types of RATs (UTRA, GSM, CDMA2000 etc.), but this would imply extending System Information even more.

  • defining new measurement performance requirements, which would apply only to user equipment in Low-mobility state. Such a variant would involve that a set of new measurements performance requirements would be created wherein a Low-frequency of handover related measurements is defined by changing the original value of $T_{Identify\_intra}$ for example becoming $T_{Low\_mobility\_identify\_intra}$, according to a new standard for example, and dedicated for the Low-mobility state. Such a set would be implemented by default in every user equipment, this method has much bigger impact on current 3GPP specification.

    - reporting (2612) criteria measurements for PHY to higher layer measurement reports (i.e. performing measurements for identified intra-frequency, inter-frequency and inter-RAT cells and passing the results to higher layers less often) by applying sf-Low$_{measure}$ scaling factor broadcasted by System Information, which is a real number >1, to multiply the periodicity of measurements performed in Normal-mobility state in such a way that this periodicity is now equal to sf-Low$_{measure}$ * {Normal-mobility state measurement periodicity)
    - for the case when the user equipment is configured to perform gap-assisted inter-frequency and inter-RAT measurements of identified cells, the user equipment performs (2613) these measurements less often by applying the integer sf-Low$_{gap}$ scaling factor sent within System Information, which has a value >1, to multiply Measurement Gap Repetition Period (MGRP) configured by the network for a user equipment, so that effective repetition period equals sf-Low$_{gap}$ * MGRP [ms]

*6.4.2 "Network aware" embodiment*

According to this embodiment, when the user equipment, which is in Low-mobility state in idle mode (2500), changes its mode from idle to active, it informs (250) network about its current mobility state during connection establishment procedure (e.g. in RRC Connection Request or RRC Connection Setup Complete message) or using user equipment assistance information.

As a consequence, the network being aware about the Low-mobility state of the user equipment, takes this fact into consideration when configuring measurements using RRC Connection Reconfiguration message as described previously.

For example, the base station of the serving cell (eNodeB) decides:

- not to configure some types of measurements for this specific user equipment being in Low-mobility state,
- to configure some measurements to be performed less often,
- to configure different filter coefficients for required measurement types,
- to configure user equipment with special Low-mobility state characteristic gap pattern, which would allow a user equipment to perform inter-frequency and inter-RAT measurements less often.

An example of such new pattern could be for example defined as following for different measurement purposes such as Inter-Frequency E-UTRAN FDD and TDD, UTRAN FDD, GERAN, LCR TDD, HRPD, CDMA2000 1x:

| Gap Pattern Id | MeasurementGap Length (MGL, ms) | Measurement Gap Repetition Period (MGRP, ms) | Minimum available time for inter-frequency and inter-RAT measurements during 480ms period(Tinter1, ms) |
|---|---|---|---|
| 2 | 6 | 320 | 6 |

Advantageously, the optimizations previously described regarding the "Autonomous User Equipment" embodiment can also be implemented in this "Network aware" embodiment, but in this case the network is aware that the user equipment in Low-mobility state performs measurements according to the rules defined for Low-mobility state, which may e.g. optimize network decision about handovers.

Thus, in this situation a network could also configure a user equipment with the previous specific scaling factors specific $sf\text{-}Low_{Identify}$, $sf\text{-}Low_{measure}$ and $sf\text{-}Low_{gap}$ values, which could be adjusted based on the type of the user equipment (smartphone, MTC device) or based on the user equipment cell reselections and handover history. In this particular case a dedicated signalling is provided.

When network is aware about the Low-mobility state of the user equipment, this fact can be taken into consideration by one of the node (base station) of the network (eNodeB) for also configuring handover reporting (262).

Indeed, according to the principle of the Low-mobility state of the invention, handover reporting (262) should be performed less frequently than in a Normal-mobility state and this can be accomplished for example by:

- using new low-mobility factors, as specified below:

  • In case of event triggered reporting:

    o ReportAmount parameter in Low-mobility state equal to ReportAmount * $sf\text{-}Low_{ReportAmount}$,
    o ReportInterval parameter shall be equal to ReportInterval * $sf\text{-}Low_{ReportInterval}$,
    o TimeToTrigger parameter shall be equal to TimeToTrigger * $Sf\text{-}Low_{TimeToTrigger}$.

  • In case of periodic triggered reporting:

    o "ReportInterval" parameter shall be equal to ReportInterval * $sf\text{-}Low_{ReportInterval}$. where $sf\text{-}Low_{ReportAmount}$ <1, $sf\text{-}Low_{ReportInterval}$ >1 and $sf\text{-}Low_{TimeToTrigger}$ 1. A value of these parameters can be configured by an operator, or

- directly defining new parameters $ReportAmount_{Low\_mobility}$, $ReportInterval_{LOW\_mobility}$ and $TimeToTrigger_{LOW\_mobility}$ in a way which optimizing user equipment power consumption without affecting handover performance negatively.

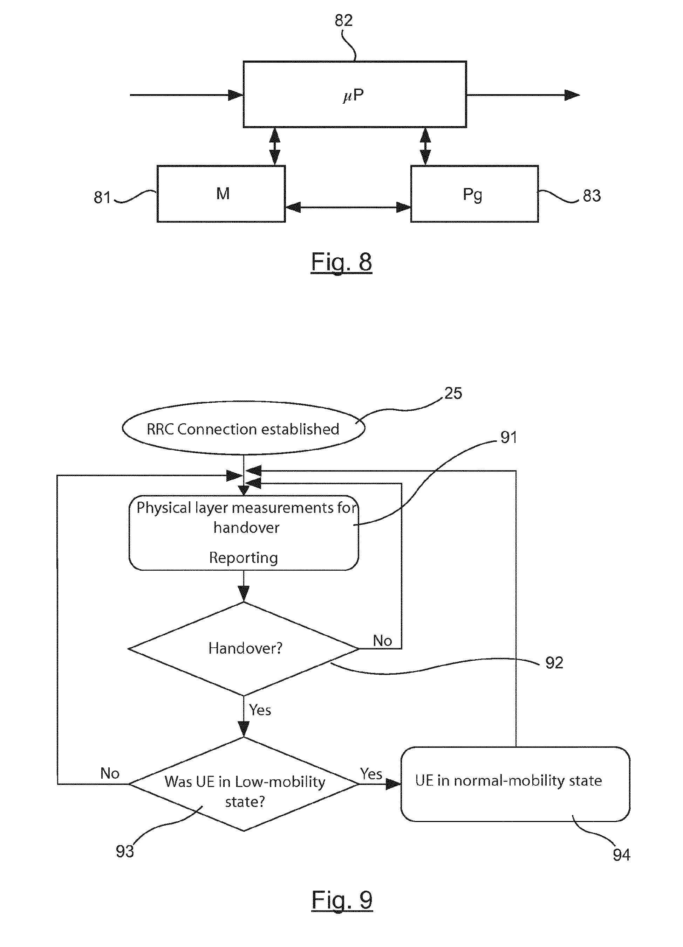

During active mode, mobility state either does not change or can be changed to Normal-mobility state if handover was performed while the user equipment was in Low-mobility state as illustrated by figure 9.

More precisely, first, the user equipment, which was previously set to Low-mobility state during the idle mode, is switched to an active mode (25).

Then physical layer measurements for handover are performed (91) and whether no, or a handover is required (92) by such measurements, the user equipment enters or not a different mobility state.

If no handover is required, the user equipment remains in the "Low-mobility" state according to the invention. On the contrary, if at least one handover is performed (corresponding to the case "YES" of the test "handover"), the user equipment goes back in the default state in the "Normal-mobility" state (94) after checking (93) that the user equipment was in the "Low-mobility" state before the handover.

*6.4.3 Example of implementation*

An hypothetic, but realistic situation in mobile operator's network is presented below for a user equipment implementing a Low-mobility state in active mode according to the invention.

This example corresponds to the case described regarding the idle mode where the user equipment supports for example two types of Radio Access Technologies (RAT) where layers' priorities are as follows: E-UTRA carrier frequency 1, E-UTRA carrier frequency 2, UTRA FDD carrier frequency 1.

After power on, a user equipment selects a cell to camp on following standardized rules. It turns out that E-UTRA carrier frequency 1 is not available, so a user equipment camps in the cell working on E-UTRA carrier frequency 2. After that procedure, it reads System Information, which contains among others values of such parameters, which are applied by a user equipment:

$T_{LM}$ = 10 minutes (Low-mobility state parameter),
ReportAmount = r32,
ReportInterval = ms240 (in other words 240 milliseconds),
TimeToTrigger = ms256,
sf-Low$_{Identify}$ = 8 (Low-mobility state parameter),
sf-Low$_{ReportAmount}$ = 1/8 (Low-mobility state parameter),
sf-Low$_{ReportInterval}$ = 4 (Low-mobility state parameter),
sf-Low$_{TimeToTrigger}$ = 2 (Low-mobility state parameter),

It Can be noted that sf-Low$_{Identify}$, Sf-Low$_{ReportAmount}$, sf-Low$_{ReportInterval}$, sf-Low$_{TimeToTrigger}$ and $T_{LM}$ parameters are new parameters introduced specially for the purpose of "Low-mobility" state processes in active mode. They shall be passed to a user equipment using either System Information and/or dedicated signalling.

In this example scenario, it is assumed, that the user equipment is configured to perform handover reporting with periodic triggering (other possible mode is handover reporting with event triggering). It means, that reporting procedure is executed each 240 ms.

According to this example scenario, the user equipment enters idle mode (RRC IDLE) and sets default mobility state, which is Normal-mobility state.

Then, the user equipment has data to transmit, so it establishes network connection and enters RRC Connected mode. In this active mode, the user equipment performs measurements of physical layer. It also performs searching and detecting of new intra-frequency, inter-frequency and inter-RAT cells. These procedures are performed according to the rules specified in Technical Specifications TS 36.133 and TS 36.331. To calculate values of timers required for these procedures, it is assumed that Tinter (minimum available time for inter-frequency and inter-RAT measurements during measurement period) is equal to 60 ms, Tintra (minimum time that is available for intra frequency measurements, during the measurement period) is equal to 50 ms and that the user equipment is not configured with DRX, and with $T_{identify,xxx}$ parameters as following:

$T_{Identify\_intra}$ = 3200ms,
$T_{Identify\_Inter}$ = 7680ms,
$T_{Identify,UTRA\_FDD}$ = 4800ms,

The user equipment finishes transmitting all the data and it then goes back to RRC IDLE mode. No handover occurred.

After choosing serving cell, the user equipment started also countdown $T_{LM}$ timer with value equal to $T_{LM}$ =10 minutes. After $T_{LM}$ reached 0 it turned out that the user equipment did not perform any cell reselection nor handover during that time, because the serving cell was still the best one according to the cell reselection criteria.

Therefore, the user equipment enters Low-mobility state according to the invention. Starting from that moment, the user equipment will perform handover measurements with lower frequency in comparison with the Normal-mobility state, according to the rules specified for Low-mobility state.

Then, the user equipment needs to provide service for a user again (e.g. data transmission or call), so it changes its mode from idle to active (RRC CONNECTED). After moving from idle to active mode, mobility state remains the same, in other words the Low-mobility state according to the invention. In this state searching and detecting of new intra-frequency, inter-frequency and inter-RAT cells is performed with relaxed performance requirements as compared to the ones in Normal-mobility state. This is achieved by using new timer values calculated using low-mobility scaling factor:

$$T_{Identify\_intra} = T_{Identify\_intra} * \text{sf-Low}_{Identify} = 3200 * 8 = 25600ms$$

$$T_{Identify\_inter} = T_{Identify\_inter} * \text{sf-Low}_{Identify} = 7680 * 8 = 61440ms$$

$$T_{Identify\_UTRA\_FDD} = T_{Identify\_UTRA\_FDD} * \text{sf-Low}_{Identify} = 4800 * 8 = 38400ms$$

Scaling factors are also applied to measurements reporting related to handover procedure. Thus, reporting is now performed less frequently.

$$\text{ReportAmount} = \text{ReportAmount} * \text{sf-Low}_{\text{ReportAmount}} = r32 \times 1/8 = r2$$

$$\text{ReportInterval} = \text{ReportInterval} * \text{sf-Low}_{\text{ReportInterval}} = 240 \times 4 = 960 \text{ ms}$$

$$\text{TimeToTrigger} = \text{TimeToTrigger} * \text{sf-Low}_{\text{TimeToTrigger}} = 256 \times 2 = 512 \text{ ms}$$

Thus, according to this example scenario, as a periodic measurement reporting is assumed, reporting procedure is now executed every 960 ms. Based on these reports eNodeB may choose to execute handover procedure.

After successful handover, the user equipment shall change its mobility state to Normal-mobility state. If no handover took place and if the user equipment goes back to RRC IDLE mode after transmitting/receiving all data, it should stay in Low-mobility state.

Modifying measurement periods and measurement report periods and amounts in active mode for Low-mobility state as described in the example allows reducing user equipment's power consumption without degradation of user experience.

*6.5 Structures of* cell mobility measurement *module according to the invention*

Finally, referring to figure 8, the simplified structures are presented of a cell mobility measurement module implementing or being used for implementing a method for performing cell measurements as described here above.

A user equipment, as illustrated in figure 8, comprises a memory 81 comprising a buffer memory, a processing unit 82 equipped for example with a microprocessor $\mu$P and driven by the computer program 83, implementing the method for performing cell measurements according to the invention.

At initialization, the code instructions of the computer program 83 are for example loaded into a RAM and then executed by the processor of the processing unit 82. The microprocessor of the processing unit 82 implements the steps of the method for performing cell measurements described here above according to the computer program instructions 63 to perform cell measurements.

To this end, the cell mobility measurement module according to the invention comprises, in addition to the buffer memory 81, a detector for detecting an absence of cell reselection or handover after expiration of a first predetermined timer, a trigger for setting the user equipment to a Low-mobility state wherein a frequency for cell measurements, called a Low-mobility frequency for cell measurements, is reduced in comparison with a frequency for cell measurements of a default state of said user equipment, called a Normal-mobility state.

These means are driven by the microprocessor of the processing unit 82.

According to a particular embodiment of the invention, the cell mobility measurement module according to the invention comprises also means for being connected to or integrated in a user equipment.

**Claims**

1. A method for performing measurements for at least one user equipment in a cellular network, wherein said method comprises, the following steps of:

   - detecting (21) an absence of cell reselection or handover after expiration of a first predetermined timer,
   - setting (22) the user equipment to a Low-mobility state wherein a frequency for cell measurements, called a Low-mobility frequency for cell measurements, is reduced in comparison with a frequency for cell measurements of a default state of said user equipment, called a Normal-mobility state.

2. The method for performing measurements for at least one user equipment in a cellular network according to claim 1, wherein when switching from an idle mode to an active mode or when switching from an active mode to an idle mode, said method maintains (26) the user equipment in said Low-mobility state.

3. The method for performing measurements for at least one user equipment in a cellular network according to claim 1,

wherein when said at least one user equipment is in an idle mode (2300):

> - said cell measurements correspond to cell reselection measurements and comprise at least serving cell measurements (231), and
> - said method further comprises, the following steps of:

>> o launching (23) said cell reselection measurements at said Low-mobility frequency for cell measurements, said serving cell measurements (231) being performed at a Low-mobility frequency for serving cell measurements, equal to a default frequency for serving cell measurements for said Normal-mobility state in idle mode, divided by a predetermined factor sf-Low$_{serving}$>1,
>> o evaluating (24) cell reselection criteria at said Low-mobility frequency for cell measurements.

4. The method for performing measurements for at least one user equipment in a cellular network according to claim 3, wherein, depending on the value of a measured Reference Signal Received Power (RSRP) (2311) and a Reference Signal Received Quality (RSRQ) (2312) parameters of the serving cell obtained during said serving cell measurements, said cell measurements comprise also another type of cell measurements belonging to the group comprising at least:

> - intra-frequency cell measurements (232),
> - inter-frequency cell measurements (233),
> - inter-RAT cell measurements (234), where "inter-RAT" means inter-Radio-Access-Technologies,
> said intra-frequency cell measurements or said inter-frequency cell measurements or said inter-RAT cell measurements being performed with a low-mobility frequency respectively for intra-frequency cell measurements or for inter-frequency cell measurements or for inter-RAT cell measurements, which is equal to a default frequency for respectively intra-frequency cell measurements or inter-frequency cell measurements or inter-RAT cell measurements for said Normal-mobility state, divided by a predetermined factor sf-Low$_T$ >1.

5. The method for performing measurements for at least one user equipment in a cellular network according to claim 4, wherein, depending on the value of measured Reference Signal Received Power (RSRP) and Reference Signal Received Quality (RSRQ) parameters of the serving cell, said method comprises also a step (235) of searching for higher, equal or lower priority inter-frequency layers and/or higher or lower inter-RAT layers performed with a low-mobility frequency for searching, which is equal to a default frequency for searching for higher, equal or lower priority inter-frequency layers and/or higher or lower inter-RAT layers for said Normal-mobility state divided by a predetermined factor sf-Low$_{search}$ >1.

6. The method for performing measurements for at least one user equipment in a cellular network according to claim 1, wherein said Low-mobility frequency for cell measurements is implemented by extending (421) the Discontinuous Reception (DRX) cycle length.

7. The method for performing measurements for at least one user equipment in a cellular network according to claim 1, wherein when said at least one user equipment is in an active mode (2600):

> - said cell measurements correspond to handover measurements and/or handover reporting, and
> - said method further comprises, the step of launching (27) said handover measurements (261) and/or said handover reporting (262) at said Low-mobility frequency for handover measurements and/or handover reporting.

8. The method for performing measurements by at least one user equipment in a cellular network according to claim 7, wherein said handover measurements (261) comprise at least one of the following sub-steps belonging to the group comprising:

> - identifying (2611) a new detectable cell performed at a low-mobility frequency for identifying a new detectable cell equal to a default frequency for identifying a new detectable cell for said Normal-mobility state in active mode, divided by a predetermined factor sf-Low$_{Identify}$>1,
> - reporting (2612) criteria measurements performed at a low-mobility frequency for reporting criteria measurements equal to a default frequency for reporting criteria measurements for said Normal-mobility state in active mode, divided by a predetermined factor sf-Low$_{measure}$>1,
> - performing (2613) gap-assisted measurements at a low-mobility frequency for gap-assisted measurements equal to a default frequency for gap-assisted measurements for said Normal-mobility state in active mode, divided by a predetermined factor $sf\text{-}Low_{gap}>1$.

9.  The method for performing measurements of at least one user equipment in a cellular network according to claim 7, wherein said method further comprises a step of informing (250) said network about a current mobility state of said user equipment during a connection establishment procedure.

10. The method for performing measurements of at least one user equipment in a cellular network according to claim 8, wherein said Low-mobility frequency for handover reporting (262) is implemented using at least one of the following sub-steps belonging to the group comprising:

    - in case of event triggered reporting:

        • decreasing (26221) the parameter corresponding to the amount of reports (ReportAmount) by multiplying it by a predetermined factor $sf\text{-}Low_{ReportAmount}<1$.
        • extending (26222) the parameter corresponding to the period of time between reports (ReportInterval) by multiplying it by a predetermined factor $sf\text{-}Low_{ReportInterval}>1$,
        • extending (26223) the parameter corresponding to the trigger time (TimeToTrigger) by multiplying it by a predetermined factor $sf\text{-}Low_{TimeToTrigger}\geq 1$,

    - in case of periodic triggered reporting:

        • extending (2611) the parameter corresponding to the period of time between reports (ReportInterval) by multiplying it by a predetermined factor $sf\text{-}Low_{ReportInterval}>1$.

11. The method for performing measurements according to claim 1, wherein, when being in said Low-mobility state, if a cell reselection or a handover is performed, the mobility state of said user equipment is changed to another mobility state belonging to the group comprising:

    - Normal-mobility state (32),
    - Medium-mobility state (36), if the number of cell reselections exceeds a first predetermined threshold after expiration of a second predetermined timer,
    - High-mobility state (37), if the number of cell reselections exceeds a second predetermined threshold after expiration of said second predetermined timer, said second predetermined threshold being strictly superior to said first threshold,

12. The method for performing measurements for at least one user equipment in a cellular network according to claim 1, wherein said method comprises also the preliminary steps of:

    - detecting (51) said user equipment inside a current cell;
    - checking (52) if said current cell belongs to a predetermined list of cells in which said Low-mobility state is considered as a default state for said user equipment;
    - when said current cell belongs to said predetermined list of cells, decreasing (53) said first predetermined timer.

13. A cell mobility measurement module for performing measurements for at least one user equipment in a cellular network, wherein said mobility cell measurement module comprises:

    - a detector for detecting an absence of cell reselection or handover after expiration of a first predetermined timer,
    - a trigger for setting the user equipment to a Low-mobility state wherein a frequency for cell measurements, called a Low-mobility frequency for cell measurements, is reduced in comparison with a frequency for cell measurements of a default state of said user equipment, called a Normal-mobility state.

14. The cell mobility measurement module for performing measurements for at least one user equipment in a cellular network according to claim 12, wherein said cell mobility measurement module further comprises also means for being connected to or integrated in a user equipment.

15. A computer program comprising instructions to implement the method for performing measurements for at least one user equipment in a cellular network according to claim 1, when said program is executed by a processor.

Fig. 1

Fig. 2

Switch on — 31

Normal - Mobility — 32

Measurements for cell reselection — 33

Cell reselection? — 34   No

Yes — 35

$N_{CR-M} < N_{CR} < N_{CR-H}$ ?   Yes → Medium - Mobility — 36

No

$N_{CR-H} < N_{CR}$ ?   Yes → High - Mobility — 38

No — 37

## Fig. 3A

Switch on — 31

Normal - Mobility — 32

33 — Measurements for cell reselection

Low - Mobility — 320

34 — Cell reselection?   No → $N_{CR=0}$ during $T_{LM}$?   No

Yes   Yes — 310

35 — $N_{CR-M} < N_{CR} < N_{CR-H}$ ?   Yes → Medium - Mobility — 36

No

$N_{CR-H} < N_{CR}$ ?   Yes → High - Mobility — 38

No — 37

## Fig. 3B

EP 2 779 745 A1

Fig. 4

Fig. 5

25

**Fig. 6**

**Fig. 7**

82

$\mu$P

81 M

Pg 83

Fig. 8

25

RRC Connection established

91

Physical layer measurements for handover

Reporting

Handover?

No

92

Yes

No

Was UE in Low-mobility state?

Yes

UE in normal-mobility state

93

94

Fig. 9

Europäisches
Patentamt

European
Patent Office

Office européen
des brevets

## EUROPEAN SEARCH REPORT

Application Number

EP 13 30 5277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/123744 A1 (INTERDIGITAL PATENT HOLDINGS [US]; ANEPU BHASKAR M [US]; PANI DIANA [C] 6 October 2011 (2011-10-06) | 1,3-6, 11-15 | INV. H04W36/00 H04W48/20 |
| Y | * paragraphs [0020] - [0023], [0048] - [0052], [0060] - [0066], [0086], [0099] * | 2,7-10 | |
| X | US 2011/124334 A1 (BRISEBOIS ARTHUR [US] ET AL) 26 May 2011 (2011-05-26) | 1,3-6, 11-15 | |
| A | * paragraphs [0035], [0040] * | 2,7-10 | |
| Y | US 2011/130141 A1 (FROST TIMOTHY JAMES [GB] ET AL) 2 June 2011 (2011-06-02) | 2,7-10 | |
| A | * paragraphs [0010], [0020], [0114] - [0125] * | 1,3-6, 11-15 | |
| A | US 2010/124934 A1 (MACH TOMASZ [GB]) 20 May 2010 (2010-05-20) * paragraphs [0025], [0045] * | 1-15 | |
| A | US 2006/246895 A1 (RYU KIL-HYEN [KR]) 2 November 2006 (2006-11-02) * abstract * * paragraphs [0027] - [0056] * | 1-13 | TECHNICAL FIELDS SEARCHED (IPC) H04W |

The present search report has been drawn up for all claims

| Place of search | Date of completion of the search | Examiner |
|---|---|---|
| Munich | 10 June 2013 | Cantagallo, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 30 5277

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2013

| Patent document cited in search report | Publication date | Patent family member(s) | Publication date |
|---|---|---|---|
| WO 2011123744 A1 | 06-10-2011 | CA 2795258 A1<br>CN 102907133 A<br>EP 2553968 A1<br>KR 20130025893 A<br>SG 184412 A1<br>WO 2011123744 A1 | 06-10-2011<br>30-01-2013<br>06-02-2013<br>12-03-2013<br>29-11-2012<br>06-10-2011 |
| US 2011124334 A1 | 26-05-2011 | US 2011124334 A1<br>US 2013079010 A1 | 26-05-2011<br>28-03-2013 |
| US 2011130141 A1 | 02-06-2011 | EP 1985137 A1<br>US 2011130141 A1 | 29-10-2008<br>02-06-2011 |
| US 2010124934 A1 | 20-05-2010 | CN 102224745 A<br>EP 2361482 A1<br>US 2010124934 A1<br>WO 2010058363 A1 | 19-10-2011<br>31-08-2011<br>20-05-2010<br>27-05-2010 |
| US 2006246895 A1 | 02-11-2006 | CN 1856145 A<br>DE 102006021253 A1<br>JP 2006311534 A<br>KR 20060114461 A<br>US 2006246895 A1 | 01-11-2006<br>15-02-2007<br>09-11-2006<br>07-11-2006<br>02-11-2006 |

EPO FORM P0459

For more details about this annex : see Official Journal of the European Patent Office, No. 12/82

**EP 2 779 745 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012207070 A
- WO 201112278 A